# EUROPÄISCHE PATENTANMELDUNG

(11) **EP 3 415 446 A1**
(43) Veröffentlichungstag der Anmeldung: **19.12.2018**
(21) Anmeldenummer: 18177547.9
(22) Anmeldetag: 13.06.2018
(51) Int. Cl.: B65G 17/06

(54) **MODULARES FÖRDERBAND UND VERFAHREN ZUR DEMONTAGE/MONTAGE EINES ERSTEN MODULS UND/ODER EINES ZWEITEN MODULS EINES MODULAREN FÖRDERBANDS**

(30) Priorität: 14.06.2017 DE 102017113096
(71) Anmelder: Ketten-Wulf Betriebs-GmbH, 59889 Eslohe-Kückelheim (DE)
(72) Erfinder: Wulf, Tobias, 59889 Eslohe (DE); Hanemann, Christian, 59872 Meschede (DE)
(74) Vertreter: Schäperklaus, Jochen

(57) **Zusammenfassung**

Förderband, umfassend
- mindestens eine Gelenkkette (11a, 11b, ...11x), mit mindestens einer ersten Querachse (12a), einer zweiten Querachse (12b) und einer dritten Querachse (12c) ausgestattet ist,
-mindestens ein erstes Modul (2a) und ein zweites in Förderrichtung (L) hintereinander angeordnetes Modul (2b), wobei die Module (2a, 2b) an den Querachsen (12a, 12b, 12c), lösbar befestigt sind, wobei
- die Module (2a, 2b) jeweils mindestens ein erstes Anschlussmittel (211) und mindestens ein zweites Anschlussmittel (221) aufweisen, wobei
- das erste Anschlussmittel (211) eine Aussparung (2112) umfasst, wobei die Aussparung (2112) des ersten Anschlussmittels (211) parallel zu der Ebene (E) des Moduls (2a, 2b) ausgerichtet ist, wobei
- das zweite Anschlussmittel (221) eine Aussparung (2212) umfasst, wobei die Aussparung (2212) des zweiten Anschlussmittels (221) senkrech zu der Ebene des Moduls (2a, 2b) ausgerichtet ist,
wobei das zweite Anschlussmittel (221) des ersten Moduls (2a) und das zweite Anschlussmittel (221) des zweiten Moduls (2b) mit derselben Querachse (12b) lösbar verbunden sind.

## Beschreibung

Die vorliegende Erfindung betrifft ein modulares Förderband gemäß dem Oberbegriff des Anspruchs 1 sowie ein Verfahren zur Demontage/Montage eines ersten Moduls und/oder eines zweiten Moduls eines modularen Förderbands gemäß Anspruch 14 bzw. 15.

Modulare Förderbänder sind zumeist aus in Laufrichtung gelenkig miteinander verbundenen Modulen, meist aus Kunststoff, zusammengesetzt, die in der Regel zu einem Endlosband verbunden sind. Das Förderband wird dabei in der Regel über geeignete Räder, insbesondere Zahnräder, angetrieben und gleitet auf einer geeigneten Oberfläche, meist einer Kunststoffoberfläche. Je nach Ausführungsform der modularen Förderbänder können diese zum Transport von Gegenständen oder auch Personen eingesetzt werden. Letztere werden in der Automobilindustrie auch als Werkermitfahrbänder angesprochen. Dabei verläuft ein solches Förderband zumeist parallel zu einer Produktionsstraße.

Eine einfache Ausführungsform eines modularen Förderbandes ist beispielsweise in der DE 100 32 741 A1 dargestellt. Im Wesentlichen werden hier einzelne Kunststoffmodule, die randseitig, insbesondere stirnseitig, mit Ösen ausgestattet sind, mittels einer quer zur Laufrichtung ausgerichteten Querachse zusammengefügt, indem die Querachse durch die Ösen hindurchgesteckt wird. Die Kunststoffmodule erstrecken sich über die gesamte Breite des Förderbandes.

Ein ähnliches Prinzip ist beispielsweise aus der EP 2 132 115 B1 bekannt geworden. Hier sind in Querrichtung zur Laufrichtung mehrere Module nebeneinander angeordnet, die aber ebenfalls mittels einer Querachse gelenkig miteinander verbunden sind. Hierdurch lassen sich letztendlich breitere Förderbänder erzeugen, die beispielsweise gerne bei der Personenbeförderung, beispielsweise als Werkermitfahrband, eingesetzt werden. Auch können so auf einfache Weise Kunststoffmodule unterschiedlicher Farbe verbaut werden, beispielsweise um Markierungen oder Warnbegrenzungen bereitzustellen.

Weiterhin sind modulare Förderbänder bekannt, die aus Kunststoffmodulen und einem metallischen Innengerüst bestehen.

Das Gerüst kann beispielsweise durch eine oder mehrere in Längsrichtung bzw. Förderrichtung verlaufende Laschen und die oben bereits genannten Querachsen gebildet werden. Eine derartige Anordnung ist beispielsweise aus der EP 0 916 598 A1 bekannt geworden. Durch das metallische Innengerüst, insbesondere die in Längsrichtung bzw. Förderrichtung verlaufenden Laschen, können grundsätzlich erheblich mehr Zugkräfte aufgenommen werden und die Steifigkeit wird erhöht, so dass dadurch weniger Längung als bei modularen Förderbändern ohne Innengerüst resultiert.

Nachteilig ist jedoch, dass sich ein Wechsel eines einzelnen Moduls aufwendig gestaltet. In den Ausführungsformen mit Querachsen müssen mindestens zwei Querachsen herausgezogen werden, wodurch das gesamte modulare Förderband geöffnet ist und entsprechende Sicherungsmaßnahmen ergriffen werden müssen.

Vom Prinzip her sind auch Module bekannt, die nicht mit Ösen, sondern mit speziell ausgerichteten, einseitig geöffneten Aussparungen auf die Querachsen aufgesteckt sind. Derartige Module sind beispielsweise aus der EP 1 616 817 A1, der GB 1 577 940 A oder der DE 698 00 378 T2 bekannt. Diese Module sind zumindest theoretisch von dem Innengerüst bzw. den Querachsen lösbar, ohne dass die Querachsen herausgezogen werden müssten.

Diese Art der Verbindung von Modul und Innengerüst erfordert jedoch entweder flexible oder verschiebbare Querachsen. So wird beispielsweise in der EP 1 616 817 A1 darauf hingewiesen, dass die Querachsen zusammengedrückt werden müssen, um das Modul auf die Querachse aufzustecken. Es ist ferner nachvollziehbar, dass relativ viel Freiraum in den Aussparungen vorhanden ist und den aufgesteckten Modulen relativ viel Bewegungsfreiheit ermöglicht. Letztendlich ist eine geschlossene Oberfläche des modularen Förderbandes nur schwer bis gar nicht realisierbar, da stets gewisse Zwischenräume für die Montage der Module benötigt werden.

Hier setzt die vorliegende Erfindung an und macht es sich zur Aufgabe, ein verbessertes modulares Förderband bereitzustellen, insbesondere ein modulares Förderband bereitzustellen, welches eine möglichst geschlossene Oberfläche und eine einfache Möglichkeit zum Wechseln eines Moduls eröffnet.

Erfindungsgemäß wird diese Aufgabe durch ein modulares Förderband mit den kennzeichnenden Merkmalen des Anspruchs 1 gelöst. Ein erfindungsgemäßes modulares Förderband zeichnet sich dadurch aus, dass das zweite Anschlussmittel des ersten Moduls und das zweite Anschlussmittel des zweiten Moduls mit derselben Querachse lösbar verbunden sind. Vorzugsweise können das zweite Anschlussmittel des ersten Moduls und das zweite Anschlussmittel des zweiten Moduls einander zugewandt sein. Durch diese Anordnung der zweiten Anschlussmittel mit der senkrechten Aussparung können die Module nach Art eines doppelflügeligen Fensters geöffnet werden. Die erste Querachse wirkt dabei wie ein Scharnier für das erste Modul und die dritte Querachse wie ein Scharnier für das zweite Modul. Wenn die Module ausreichend weit aufgeklappt sind, kann eines oder beide Module von der jeweiligen Querachse abgezogen werden und beispielsweise durch ein neues Modul bzw. neue Module ersetzt werden. Der Einbau erfolgt dann in umgekehrter Reihenfolge, sprich das oder die neuen Module werden auf die jeweilige Querachse aufgesteckt und in Richtung der gemeinsamen Querachse so weit geschwenkt, dass die zweiten Anschlussmittel wieder auf der gemeinsamen Querachse einrasten.

Weitere vorteilhafte Ausgestaltungen der vorgeschlagenen Erfindung ergeben sich insbesondere aus den Merkmalen der Unteransprüche. Die Gegenstände bzw. Merkmale der verschiedenen Ansprüche können grundsätzlich beliebig miteinander kombiniert werden.

In einer vorteilhaften Ausgestaltung der Erfindung kann vorgesehen sein, dass das erste Anschlussmittel des ersten Moduls und das erste Anschlussmittel des zweiten Moduls mit unterschiedlichen Querachsen verbunden sind. Die ersten Anschlussmittel der Module sind entsprechend von der gemeinsamen Querachse abgewandt und dienen beim Aufklappen der Module zunächst als Gelenke.

In einer weiteren vorteilhaften Ausgestaltung der Erfindung kann vorgesehen sein, dass die ersten Anschlussmittel des ersten Moduls und des zweiten Moduls einander abgewandt sind. Dementsprechend sind die zweiten Anschlussmittel der Module einander zugewandt.

In einer weiteren vorteilhaften Ausgestaltung der Erfindung kann vorgesehen sein, dass das erste Modul mit seinem ersten Anschlussmittel mit einer ersten Querachse und mit seinem zweiten Anschlussmittel mit einer zweiten Querachse lösbar verbunden ist, wobei das zweite Modul mit seinem ersten Anschlussmittel mit einer dritten Querachse und mit seinem zweiten Anschlussmittel mit der zweiten Querachse lösbar verbunden ist. Dies ist die entsprechende Konstellation zweier mit dem Innengerüst verbundener Module.

In einer weiteren vorteilhaften Ausgestaltung der Erfindung kann vorgesehen sein, dass jedes der Module im Wesentlichen als flächige Platte mit einer Oberseite, einer Unterseite, zwei quer zur Förderrichtung ausgerichteten Stirnseiten und zwei parallel zur Förderrichtung ausgerichteten Seitenwangen ausgestaltet ist. Ein derartiges, vorzugsweise rechteckförmiges, Modul eignet sich in besonders vorteilhafter Weise als Modul für ein erfindungsgemäßes Förderband.

In einer weiteren vorteilhaften Ausgestaltung der Erfindung kann vorgesehen sein, dass jedes der Anschlussmittel einen Vorsprung umfasst, wobei die Aussparung in dem Vorsprung angeordnet ist. Die Vorsprünge können dazu dienen, die Aussparungen aufzunehmen, wobei die Vorsprünge wiederum ausladend an dem betreffenden Modul angebracht sein können.

In einer weiteren vorteilhaften Ausgestaltung der Erfindung kann vorgesehen sein, dass jedes der Module über mehrere erste Anschlussmittel verfügt, die entlang der ersten Stirnseite des Moduls angeordnet sind bzw. die erste Stirnseite bilden, wobei Zwischenräume zwischen den ersten Anschlussmitteln vorgesehen sind, wobei jedes der Module über mehrere zweite Anschlussmittel verfügt, die entlang der zweiten Stirnseite des Moduls angeordnet sind bzw. die zweite Stirnseite bilden, wobei Zwischenräume zwischen den zweiten Anschlussmitteln vorgesehen sind. Die Vorsprünge können zusammen mit den Zwischenräumen zwischen den Vorsprüngen ein kammartiges Gebilde bilden, welches in ein anderes derart ausgebildetes Anschlussmittel eines anderen Moduls eingreifen kann. Die Paarung ist vorzugsweise immer erstes Anschlussmittel zu erstes Anschlussmittel und zweites Anschlussmittel zu zweites Anschlussmittel.

In einer weiteren vorteilhaften Ausgestaltung der Erfindung kann vorgesehen sein, dass die Vorsprünge des zweiten Anschlussmittels des ersten Moduls in die zugewandten Zwischenräume der zweiten Anschlussmittel des zweiten Moduls eingreifen, wobei die Vorsprünge der zweiten Anschlussmittel des zweiten Moduls in die zugewandten Zwischenräume der zweiten Anschlussmittel des ersten Moduls eingreifen. Hierdurch entsteht eine gewisse Verzahnung zwischen den Modulen.

In einer weiteren vorteilhaften Ausgestaltung der Erfindung kann vorgesehen sein, dass ein Abschnitt des ersten Moduls den Vorsprung des zweiten Moduls überragt bzw. zur Oberseite hin überdeckt und/oder dass ein Abschnitt des zweiten Moduls den Vorsprung des ersten Moduls überragt bzw. zur Oberseite hin überdeckt. Hierdurch ergibt sich eine nahezu geschlossene Oberfläche des Förderbandes.

Eine weitere Aufgabe der vorliegenden Erfindung liegt darin, ein vorteilhaftes Verfahren zur Demontage eines ersten Moduls und/oder eines zweiten Moduls eines modularen Förderbands gemäß einem der Ansprüche 1 bis 13 vorzuschlagen, insbesondere ein Verfahren vorzuschlagen, bei dem ein einzelnes Modul oder auch zwei Module auf einfache Art und Weise aus dem Förderband entnommen werden können.

Zur Lösung der Aufgabe werden erfindungsgemäß folgende Schritte vorgeschlagen:
- Lösen der zweiten Anschlussmittel des ersten Moduls und des zweiten Moduls von der gemeinsamen Querachse, insbesondere dadurch, dass die Module von unten aus dem Innengerüst herausgedrückt oder von oben mit einem Schraubendreher und/oder einem anderen geeigneten Werkzeug herausgehebelt werden;
- gleichzeitiges Schwenken des ersten Moduls um die erste Querachse sowie Schwenken des zweiten Moduls um die dritte Querachse;
- Herausnahme des ersten und/oder zweiten Moduls durch Lösen der ersten Anschlussmittel des jeweiligen Moduls.

Ebenso können auf einfache Art und Weise ein einzelnes oder zwei Module wieder in das Förderband eingesetzt werden. Hierzu werden erfindungsgemäß folgende Schritte vorgeschlagen:
- Aufstecken des ersten Moduls mit seinem ersten Anschlussmittel auf die erste Querachse;
- Aufstecken des zweiten Moduls mit seinem ersten Anschlussmittel auf die dritte Querachse;
- gleichzeitiges Schwenken beider Module um die jeweilige Querachse in Richtung der zweiten Querachse;
- Aufstecken der jeweiligen zweiten Anschlussmittel der Module auf die zweite Querachse.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:

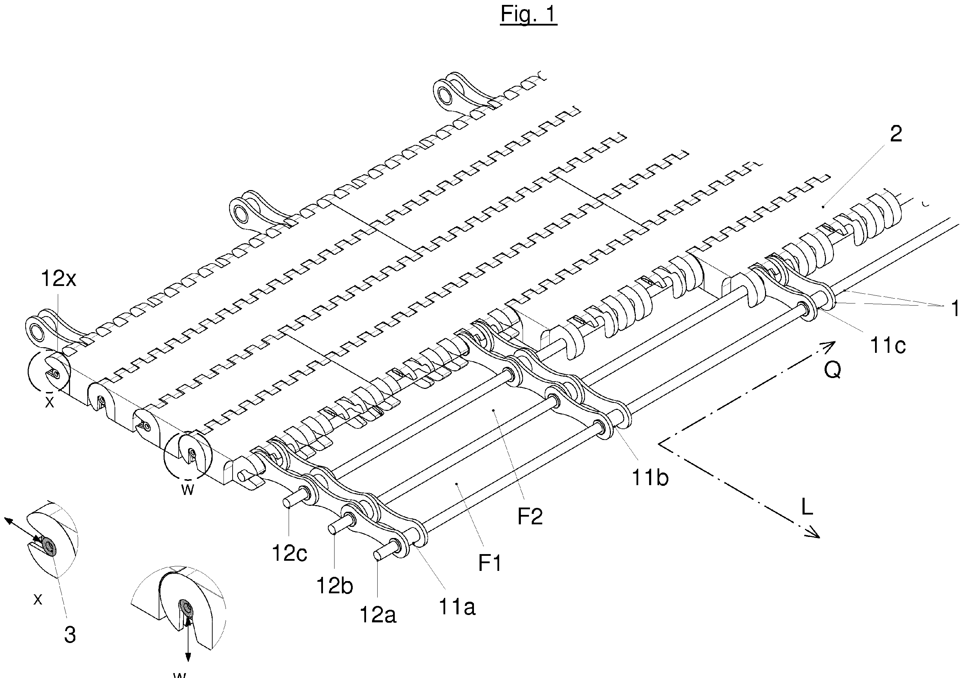

- Fig. 1: ein erfindungsgemäßes modulares Förderband in einer perspektivischen Darstellung in einer Ansicht von oben;

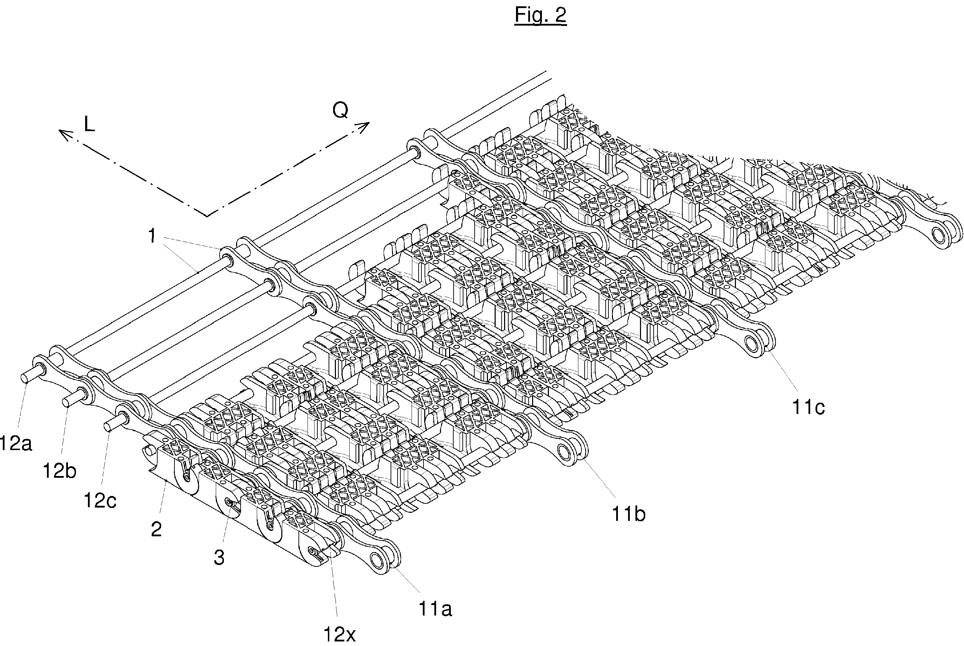

- Fig. 2: ein erfindungsgemäßes modulares Förderband in einer perspektivischen Darstellung in einer Ansicht von unten;

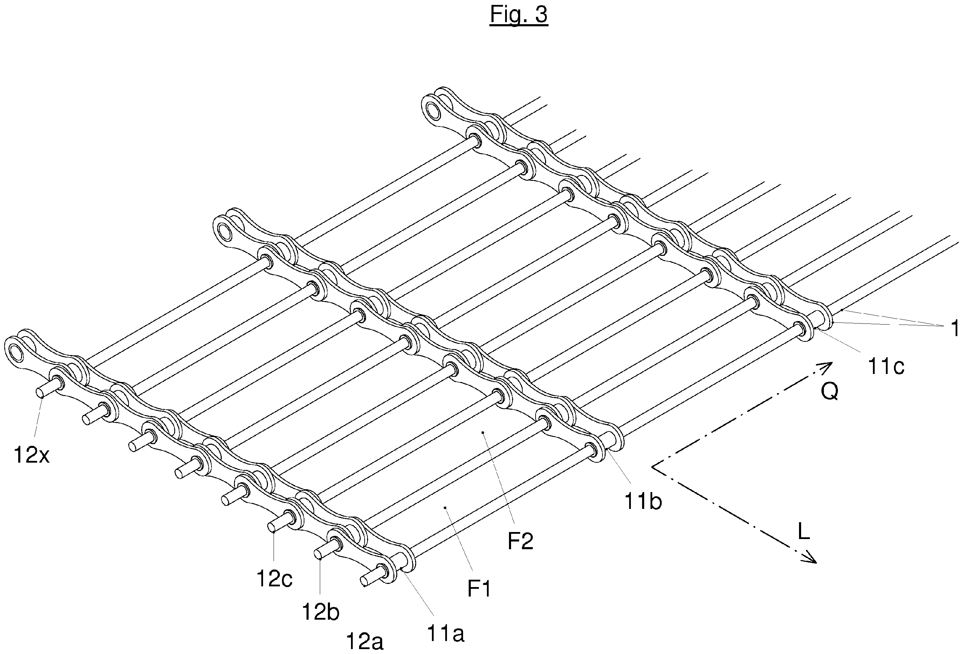

- Fig. 3: ein Innengerüst für ein erfindungsgemäßes modulares Förderband in einer perspektivischen Darstellung;

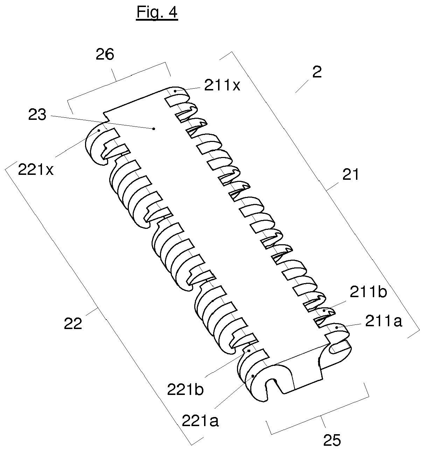

- Fig. 4: ein Modul für ein erfindungsgemäßes modulares Förderband in einer perspektivischen Draufsicht;

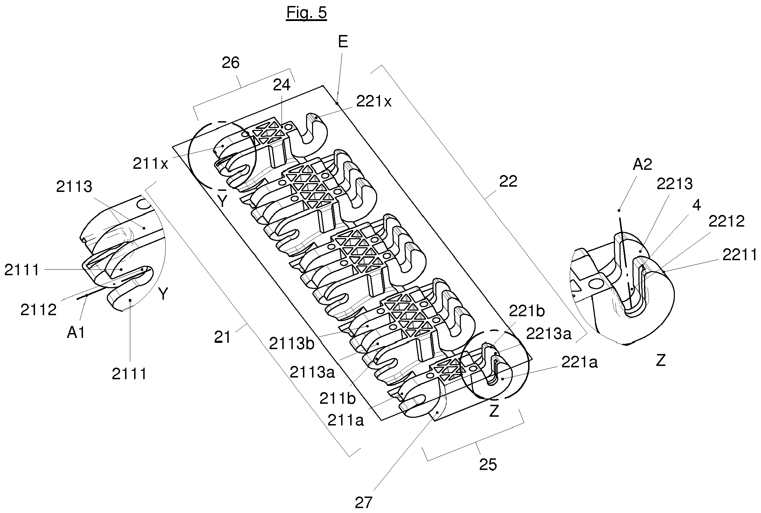

- Fig. 5: ein Modul für ein erfindungsgemäßes modulares Förderband in einer perspektivischen Ansicht von unten;

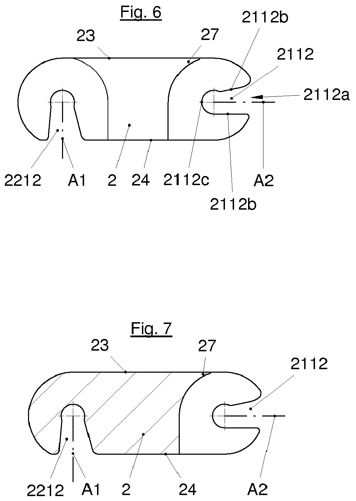

- Fig. 6: ein Modul für ein erfindungsgemäßes modulares Förderband in einer seitlichen Ansicht;
- Fig. 7: ein Modul für ein erfindungsgemäßes modulares Förderband in einer seitlichen geschnittenen Ansicht;

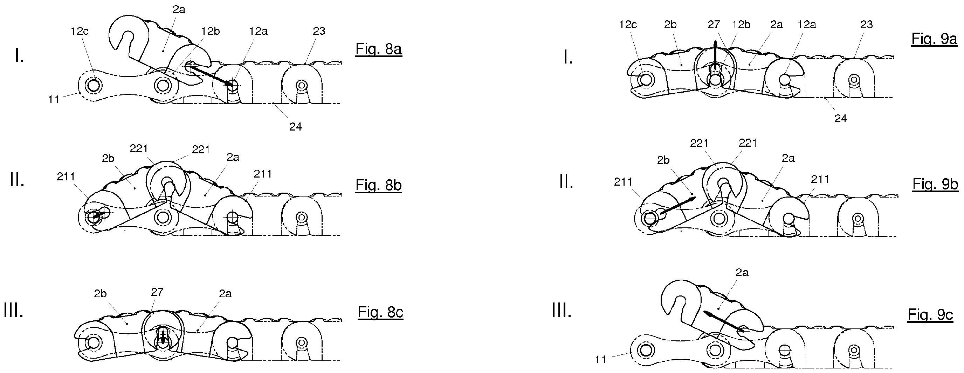

- Fig. 8a-c: eine schematische Darstellung der Montage zweier Module;
- Fig. 9a-c: eine schematische Darstellung der Demontage eines bzw. zweier Module.

Folgende Bezugszeichen werden in den Abbildungen verwendet:
- A1: Ausrichtung der Aussparung des ersten Anschlussmittels
- A2: Ausrichtung der Aussparung des zweiten Anschlussmittels

- L: Längsrichtung / Förderrichtung
- Q: Querrichtung
- F: Ausfachung
- E: Ebene des Moduls
1 Innengerüst
2 Modul
3 Sicherungsscheibe
4 Sicherungsscheibenaufnahmenut
- 11: Gelenkkette
- 12: Querachse

- 21: erste Stirnseite
- 22: zweite Stirnseite
- 23: Oberseite
- 24: Unterseite
- 25: erste Seitenwange
- 26: zweite Seitenwange
- 27: Überdeckung

- 211: erstes Anschlussmittel
- 221: zweites Anschlussmittel

- 2111: Vorsprung
- 2112: Aussparung
- 2113: Zwischenraum

- 2211: Vorsprung
- 2212: Aussparung
- 2213: Zwischenraum

Ein erfindungsgemäßes modulares Förderband umfasst im Wesentlichen eine Anzahl von Modulen 2, 2a, 2b sowie ein Innengerüst 1.

Zur Orientierung soll von einer typischen Förderrichtung L des Förderbandes als Längsrichtung L ausgegangen werden. Entsprechend dazu ergibt sich eine Querrichtung Q in der Breite des Förderbandes. Die nachfolgenden Ausführungen beziehen sich vornehmlich auf ein als Werkermitfahrband ausgestaltetes modulares Förderband. Die entsprechenden, gegebenenfalls vorzunehmenden Anpassungen für andere Verwendungszwecke sind dem Fachmann hinreichend bekannt.

Das Innengerüst 1 umfasst in einer bevorzugten Ausführungsform der Erfindung im Wesentlichen mindestens zwei Gelenkketten 11a, 11b, ... 11x, insbesondere Hohlbolzenketten, die in Längsrichtung L verlaufen und parallel zueinander angeordnet sind ("x" wird hier und im Folgenden als Platzhalter für eine fortlaufende Nummerierung verwendet). Das Innengerüst umfasst ferner mindestens eine Querachse, vorzugsweise eine Mehrzahl von Querachsen 12a bis 12x, die in Querrichtung verlaufen und parallel zueinander angeordnet sind. Die Querachsen 12a bis 12x sind vorzugsweise durch die Gelenke bzw. Hohlbolzen der Gelenkketten 11a, 11b, ... 11x hindurchgesteckt. Die Querachsen 12a bis 12x können verschieblich in den Gelenken bzw. Hohlbolzen der Gelenkketten 11a, 11b, ... 11x aufgenommen sein. Grundsätzlich ist auch eine einzige Gelenkkette möglich. Diese könnte beispielsweise nach beiden Seiten herausstehende Querachsen zur Befestigung der Module 2, 2a, 2b haben.

Als Material für die Querachsen 12a bis 12x und die Gelenkketten 11a, 11b, ... 11x kommt vorzugsweise Metall in Frage. Denkbar sind aber auch andere hochfeste Werkstoffe, wie beispielsweise hochfeste Kunststoffe, etc.

Im Ergebnis ergibt sich ein Innengerüst 1, welches in etwa rechteckförmige Ausfachungen F1 bis Fx aufweist, in welche Module 2, 2a, 2b eingesetzt werden können, wobei sich die Module 2, 2a, 2b auch über die Gelenkketten 11a, 11b, ... 11x erstrecken können.

Es ergibt sich vorzugsweise ein Kraftfluss der Zugkraft vom Modul 2, 2a, 2b über die Querachse 12a bis 12x in die Gelenkkette 11a, 11b, ... 11x, d.h. die Module 2, 2a, 2b selbst müssen vorzugsweise nicht die Zugkräfte übertragen.

Für die nähere Beschreibung der Erfindung soll davon ausgegangen werden, dass ein Innengerüst 1 mit mindestens drei Querachsen, sprich einer ersten Querachse 12a, einer zweiten Querachse 12b und einer dritten Querachse 12c ausgestattet ist. An den vorgenannten Querachsen 12a, 12b, 12c können zwei hintereinander angeordnete Module 2a und 2b lösbar befestigt werden.

Bei jedem der Module 2, 2a, 2b handelt es sich im Wesentlichen um einen plattenförmigen Körper, vorzugsweise aus Kunststoff, mit einer Oberseite 23, einer Unterseite 24 sowie zwei Seitenwangen 25, 26 und zwei Stirnseiten 21, 22, die den Rand des Moduls 2, 2a, 2b bilden. Von der Grundstruktur ist das Modul 2, 2a, 2b rechteckförmig, wobei die Seiten mit zahlreichen, insbesondere funktionsbedingten, Strukturen ausgestattet sind.

Die Oberseite 23 ist vorzugsweise strukturiert ausgebildet, um beispielsweise einer Person, aber auch einem zu transportierenden Gegenstand, einen entsprechenden Halt zu bieten. Zudem ist das Modul 2, 2a, 2b auf der gegenüberliegenden Unterseite 24 vorzugsweise für ein Gleiten auf einer entsprechenden Oberfläche ausgestaltet.

Die erste Stirnseite 21 und die zweite Stirnseite 22 sind bei einem verbauten Modul 2, 2a, 2b entsprechend senkrecht zur Förderrichtung L ausgerichtet, die Seitenwangen 25, 26 entsprechend in Förderrichtung L.

Das Modul 2, 2a, 2b ist mit einem ersten Anschlussmittel 211 zur lösbaren Verbindung mit einer Querachse 12a bis 12x und mit einem zweiten Anschlussmittel 221 zur lösbaren Verbindung mit einer weiteren, insbesondere der vorgenannten Querachse 12a bis 12x benachbarten, Querachse 12a bis 12x ausgestattet.

Das erste Anschlussmittel 211 umfasst mindestens einen Vorsprung 2111 mit einer Aussparung 2112. Auch das zweite Anschlussmittel 221 umfasst mindestens einen Vorsprung 2211 mit einer Aussparung 2212. Das erste Anschlussmittel 211 ist an der ersten Stirnseite 21 des Moduls 2, 2a, 2b angeordnet bzw. bildet die erste Stirnseite des Moduls 2, 2a, 2b, während das zweite Anschlussmittel 221 an der zweiten Stirnseite 22 des Moduls 2, 2a, 2b angeordnet ist bzw. die zweite Stirnseite des Moduls 2, 2a, 2b bildet.

Die Aussparungen 2112, 2212 weisen eine Öffnung 2112a, Seitenflächen 2112b und einen Boden 2112c auf. Die Aussparungen 2112, 2212 sind vorzugsweise als längliche Aussparungen ausgestaltet. Vorzugsweise verengen sich die Aussparungen 2112, 2212 in Richtung des Bodens 2112c leicht, um sich kurz vor dem Boden 2112c wieder zu weiten bzw. in eine in etwa dem Querschnitt der Querachse 12a bis 12x entsprechende Aussparung 2112, 2212 überzugehen. Dabei ist der schmalste Abstand der Seitenflächen 2112b geringfügig schmaler als die Querachse12a bis 12x, auf welche das Anschlussmittel 211, 221 aufgesteckt werden soll. Hierdurch kann eine einfach ausgestaltete lösbare Verbindung zwischen Anschlussmittel 211, 221 und Querachse 12a bis 12x bereitgestellt werden. Die Anschlussmittel 211, 221 werden gewissermaßen lösbar auf die jeweilige Querachse 12a bis 12x aufgesteckt.

Es ist ferner vorgesehen, dass das erste Anschlussmittel 211 bzw. die Aussparung 2112 des ersten Anschlussmittels 211 eine andere Ausrichtung, als das zweite Anschlussmittel 221 bzw. die Aussparung 2212 des zweiten Anschlussmittels 221 aufweist.

Die Ausrichtungen der Aussparungen 2112, 2212 sind in den jeweiligen Abbildungen als strichpunktierte Linie A1 bzw. A2 dargestellt, die gewissermaßen die Längsachse der Aussparung 2112, 2212 darstellt. Soweit eine durch das Modul 2, 2a, 2b aufgespannte Ebene E als Bezugsebene verwendet wird, ist die Aussparung 2212 des zweiten Anschlussmittels 221 senkrecht oder im Wesentlichen senkrecht zu der Ebene E ausgerichtet, wohingegen die Aussparung 2112 des ersten Anschlussmittels 211 in der Ebene E oder im Wesentlichen in der Ebene E bzw. parallel oder im Wesentlichen parallel zu der Ebene E ausgerichtet ist.

Zudem ist vorzugsweise vorgesehen, dass das Modul 2, 2a, 2b auf der ersten Stirnseite 21 mit mehreren ersten Anschlussmitteln 211a bis 211x ausgestattet ist, wobei die ersten Anschlussmittel 211a bis 211x bzw. Vorsprünge durch Zwischenräume 2113a bis 2113x getrennt sind. Weiter ist vorzugsweise vorgesehen, dass das Modul 2, 2a, 2b auf der zweiten Stirnseite 22 mit mehreren zweiten Anschlussmitteln 221a bis 221x ausgestattet ist, wobei die zweiten Anschlussmittel 221a bis 221x bzw. Vorsprünge durch Zwischenräume 2213a bis 2213x getrennt sind.

Die Abfolge der ersten Anschlussmittel 211a bis 211x und der Zwischenräume 2113a bis 2113x eines ersten Moduls 2a ist dazu eingerichtet, in die ersten Anschlussmittel 211a bis 211x und die Zwischenräume 2113a bis 2113x eines weiteren Moduls 2x einzugreifen.

Die Abfolge der zweiten Anschlussmittel 221a bis 221x und der Zwischenräume 2213a bis 2213x eines ersten Moduls 2a ist dazu eingerichtet, in die zweiten Anschlussmittel 221a bis 221x und die Zwischenräume 2213a bis 2213x eines zweiten Moduls 2b einzugreifen.

Letztendlich kann jedes Modul 2, 2a, 2b durch vorzugsweise Drehung um 180° mit einem weiteren Modul 2, 2a, 2b verbunden werden, jeweils in der Konstellation erste Anschlussmittel 211a bis 211x zu ersten Anschlussmitteln 211a bis 211x bzw. zweite Anschlussmittel 221a bis 221x zu zweiten Anschlussmitteln 221a bis 221x.

Das zweite Modul 2b wird hierzu vorzugsweise um 180° gedreht. Die Abfolge der Anschlussmittel 211a bis 211x, 221a bis 221x bzw. Zwischenräume 2113a bis 2113x, 2213a bis 2213x ist vorzugsweise so ausgestaltet, dass die Module 2, 2a, 2b hinsichtlich der Anschlussmittel 211a bis 211x, 221a bis 221x und Zwischenräume 2113a bis 2113x, 2213a bis 2213x alle gleich ausgestaltet sein können, aber dennoch in der vorgenannten Konstellation zusammengefügt werden können.

Im Hinblick auf die Oberfläche des modularen Förderbandes, sind die Vorsprünge bzw. Zwischenräume 2113a bis 2113x, 2213a bis 2213x derart ausgestaltet, dass sich eine weitestgehend geschlossene Oberfläche des modularen Förderbandes auch im Bereich der Übergänge Vorsprung / Zwischenraum ergibt. Dies kann beispielsweise dadurch gewährleistet werden, dass eine Überdeckung 27 eines ersten Moduls 2a den Vorsprung eines nächsten Moduls 2b überragt bzw. überdeckt. Im Falle eines in der Seitenansicht kopfseitig abgerundeten Vorsprungs, kommt beispielsweise eine in einer Seitenansicht ebenfalls rund zulaufende Überdeckung in Frage.

Weitere Details der vorliegenden Erfindung ergeben sich aus einer Beschreibung der Montage bzw. Demontage eines bzw. zweier Module 2a, 2b.

Ausgangspunkt der Montage sind die drei Querachsen 12a, 12b und 12c, die in jeweiligen Abständen parallel zueinander angeordnet sind.

Zunächst wird ein erstes Modul 2a mit seinen ersten Anschlussmitteln 211 auf die erste Querachse 12a aufgesteckt.

In einem weiteren Arbeitsgang wird ein zweites Modul 2b mit seinen ersten Anschlussmitteln 211 auf die dritte Querachse 12c aufgesteckt.

In einem weiteren Arbeitsgang werden beide Module 2a und 2b durch gemeinsames Schwenken mit der zweiten Querachse 12b verbunden. Dabei ist es von Bedeutung, dass die jeweiligen Vorsprünge 2211 auf die jeweiligen Zwischenräume 2213 zubewegt werden, dergestalt, dass die Vorsprünge 2211 in die Zwischenräume 2213 eintauchen können.

Dieser Vorgang kann für den Rest des modularen Förderbandes wiederholt werden, bis alle Module 2, 2a, 2b an den dafür vorgesehenen Stellen eingesetzt sind. Im Ergebnis ergibt sich ein modulares Förderband mit einer weitestgehend geschlossenen Oberfläche.

Es ist ersichtlich, dass jeweils die zweiten Anschlussmittel 221 mit den senkrechten Aussparungen 2212 auf einer gemeinsamen Querachse 12b angeordnet sind bzw. die zweiten Anschlussmittel 221 einander zugewandt sind. Hierdurch ergibt sich eine vorteilhafte Möglichkeit der Demontage eines bzw. beider der vorgenannten Module 2a, 2b.

Um ein Modul 2, 2a, 2b herauszunehmen, werden die zweiten Anschlussmittel 221 zweier in Förderrichtung L hintereinander liegender Module, beispielsweise der Module 2a und 2b, gelöst. Dies kann beispielsweise dadurch geschehen, dass die Module 2a, 2b von unten aus dem Innengerüst 1 herausgedrückt oder von oben mit einem Schraubendreher oder einem anderen geeigneten Werkzeug herausgehebelt werden.

Die Module 2a und 2b werden entsprechend um die Querachse 12a bzw. 12c geschwenkt, mit denen sie noch mit den ersten Anschlussmitteln 211 verbunden sind. Die beiden Module 2a und 2b klappen nach Art eines doppelflügeligen Fensters auf. Es ist ersichtlich, dass die Überdeckungen 27, welche die Module 2a, 2b einzeln an einem Aufklappen hindern, hier durch das Aufklappen zweier Module 2a, 2b, deren zweiten Anschlussmittel 221 sich gegenüberstehen bzw. auf einer gemeinsamen Querachse 12b angebracht sind, nicht behindern. Anschließend kann das jeweilige Modul 2a, 2b oder auch beide Module 2a, 2b gewechselt werden. Das Einsetzen erfolgt wie oben bereits beschrieben.

Vorzugsweise kann vorgesehen sein, dass das modulare Förderband mindestens ein erstes Modulpaar, umfassend ein erstes Modul und ein zweites Modul, sowie ein zweites Modulpaar, umfassend ein erstes Modul und ein zweites Modul, umfasst, wobei die Modulpaare in Querrichtung versetzt angeordnet sind, sprich es existiert vorzugsweise ein Versatz der Modulpaare zur nächsten Reihe von Modulpaaren. Hierdurch kann der Verbund der Module verstärkt und entsprechend die Stabilität des Förderbandes verbessert werden.

Es kann ferner vorzugsweise vorgesehen sein, dass die Querachsen 12a bis 12x mit lösbaren Axialsicherungen, beispielsweise Sicherungsscheiben 3, ausgestattet sind. Die Axialsicherungen dienen entsprechend zur axialen Fixierung der äußeren Module des Förderbandes. Zur Aufnahme der Sicherungsscheibe 3 kann eine Sicherungsscheibenaufnahmenut 4 in dem Modul vorgesehen sein.

Auch kann vorzugsweise vorgesehen sein, dass das Förderband mit Seitenwangen ausgestattet ist. Diese dienen vornehmlich der Seitenführung des Förderbandes.

Es können mehrere Kettendurchführungen in den Modulen 2, 2a, 2b vorgesehen sein, so dass eine variable Aufteilung und Anzahl der Kettenstränge möglich ist.

## Patentansprüche

1. Modulares Förderband, umfassend
- ein Innengerüst (1), umfassend mindestens eine in Förderrichtung (L) verlaufende Gelenkkette (11a, 11b, ...11x), wobei die Gelenkkette (11a, 11b, ...11x) mit mindestens einer ersten Querachse (12a), einer zweiten Querachse (12b) und einer dritten Querachse (12c) ausgestattet ist,
- mindestens ein erstes Modul (2a) und ein zweites Modul (2b), wobei die Module (2a, 2b) in Förderrichtung (L) hintereinander angeordnet sind, wobei die Module (2a, 2b) an dem Innengerüst (1), insbesondere den Querachsen (12a, 12b, 12c), lösbar befestigt sind, wobei
- die Module (2a, 2b) jeweils mindestens ein erstes Anschlussmittel (211) zur lösbaren Verbindung mit einer Querachse (12a, 12b, 12c) und mindestens ein zweites Anschlussmittel (221) zur lösbaren Verbindung mit einer anderen Querachse (12a, 12b, 12c) aufweisen, wobei
- das erste Anschlussmittel (211) eine Aussparung (2112) umfasst, wobei die Aussparung (2112) des ersten Anschlussmittels (211) in einer Ebene (E) oder im Wesentlichen in der Ebene(E) bzw. parallel oder im Wesentlichen parallel zu der Ebene (E) des Moduls (2a, 2b) ausgerichtet ist, wobei
- das zweite Anschlussmittel (221) eine Aussparung (2212) umfasst, wobei die Aussparung (2212) des zweiten Anschlussmittels (221) senkrecht oder im Wesentlichen senkrecht zu der Ebene des Moduls (2a, 2b) ausgerichtet ist,
**dadurch gekennzeichnet, dass**
das zweite Anschlussmittel (221) des ersten Moduls (2a) und das zweite Anschlussmittel (221) des zweiten Moduls (2b) mit derselben Querachse (12b) lösbar verbunden sind.

2. Modulares Förderband nach Anspruch 1, **dadurch gekennzeichnet, dass** das zweite Anschlussmittel (221) des ersten Moduls (2a) und das zweite Anschlussmittel (221) des zweiten Moduls (2b) einander zugewandt sind.

3. Modulares Förderband nach einem der Ansprüche 1 oder 2, **dadurch gekennzeichnet, dass** das erste Anschlussmittel (211) des ersten Moduls (2a) und das erste Anschlussmittel (211) des zweiten Moduls (2b) mit unterschiedlichen Querachsen (12a, 12c) verbunden sind.

4. Modulares Förderband nach einem der Ansprüche 1 bis 3, **dadurch gekennzeichnet, dass** die ersten Anschlussmittel (221) des ersten Moduls (2a) und des zweiten Moduls (2b) einander abgewandt sind.

5. Modulares Förderband nach einem der Ansprüche 1 bis 4, **dadurch gekennzeichnet, dass** das erste Modul (2a) mit seinem ersten Anschlussmittel (211) mit einer ersten Querachse (12a) und mit seinem zweiten Anschlussmittel (221) mit einer zweiten Querachse (12b) lösbar verbunden ist, wobei das zweite Modul (2b) mit seinem ersten Anschlussmittel (211) mit einer dritten Querachse (12c) und mit seinem zweiten Anschlussmittel (221) mit der zweiten Querachse (12b) lösbar verbunden ist.

6. Modulares Förderband nach einem der Ansprüche 1 bis 5, **dadurch gekennzeichnet, dass** jedes der Module (2a, 2b) als flächige Platte mit einer Oberseite (23), einer Unterseite (24), zwei quer zur Förderrichtung (L) ausgerichteten Stirnseiten (21, 22) und zwei parallel zur Förderrichtung (L) ausgerichteten Seitenwangen (25, 26) ausgestaltet ist.

7. Modulares Förderband nach einem der Ansprüche 1 bis 6, **dadurch gekennzeichnet, dass** jedes der Anschlussmittel (211, 221) einen Vorsprung (2111, 2211) und die in dem Vorsprung (2111, 2211) angeordnete Aussparung (2112, 2212) umfasst.

8. Modulares Förderband nach einem der Ansprüche 1 bis 7, **dadurch gekennzeichnet, dass** jedes der Module (2a, 2b) über mehrere erste Anschlussmittel (211a bis 211x) verfügt, die entlang der ersten Stirnseite (21) des Moduls (2a, 2b) angeordnet sind bzw. die erste Stirnseite bilden, wobei Zwischenräume (2113a bis 2113x) zwischen den ersten Anschlussmitteln (211a bis 211x) vorgesehen sind, wobei jedes der Module (2a, 2b) über mehrere zweite Anschlussmittel (221a bis 221x) verfügt, die entlang der zweiten Stirnseite (22) des Moduls (2a, 2b) angeordnet sind bzw. die zweite Stirnseite bilden, wobei Zwischenräume (2213a bis 2213x) zwischen den zweiten Anschlussmitteln (221a bis 221x) vorgesehen sind.

9. Modulares Förderband nach Anspruch 8, **dadurch gekennzeichnet, dass** die Vorsprünge (2211) des zweiten Anschlussmittels (221) des ersten Moduls (2a) in die zugewandten Zwischenräume (2213) des zweiten Anschlussmittels (221) des zweiten Moduls (2b) eingreifen, wobei die Vorsprünge (2211) des zweiten Anschlussmittels (221) des zweiten Moduls (2b) in die zugewandten Zwischenräume (2213) des zweiten Anschlussmittels (221) des ersten Moduls (2a) eingreifen.

10. Modulares Förderband nach einem der Ansprüche 7 bis 9, **dadurch gekennzeichnet, dass** ein Abschnitt (27) des ersten Moduls (2a) den Vorsprung (2111, 2211) des zweiten Moduls (2b) überragt bzw. zur Oberseite (23) hin überdeckt und/oder dass ein Abschnitt (27) des zweiten Moduls (2b) den Vorsprung (2111, 2211) des ersten Moduls (2a) überragt bzw. zur Oberseite (23) hin überdeckt.

11. Modulares Förderband nach einem der Ansprüche 5 bis 10, **dadurch gekennzeichnet, dass** das Innengerüst (1), mindestens zwei in Förderrichtung (L) verlaufende Gelenkketten (11a, 11b) umfasst, wobei die Gelenkketten (11a, 11b) zumindest mit der ersten Querachse (12a), der zweiten Querachse (12b) und der dritten Querachse (12c) verbunden sind.

12. Modulares Förderband nach einem der Ansprüche 1 bis 11, **dadurch gekennzeichnet, dass** das modulare Förderband mindestens ein erstes Modulpaar, umfassend ein erstes Modul und ein zweites Modul, sowie ein zweites Modulpaar, umfassend ein erstes Modul und ein zweites Modul, umfasst, wobei die Modulpaare versetzt angeordnet sind.

13. Modulares Förderband nach einem der Ansprüche 1 bis 12, **dadurch gekennzeichnet, dass** die Querachsen (12a, 12b, 12c) mit lösbaren Axialsicherungen, beispielsweise Sicherungsscheiben (3), ausgestattet sind

14. Verfahren zur Demontage eines ersten Moduls (2a) und/oder eines zweiten Moduls (2b) aus einem modularen Förderband nach einem der Ansprüche 1 bis 13, **gekennzeichnet durch** nachfolgende Schritte:
- Lösen der zweiten Anschlussmittel (221) des ersten Moduls (2a) und des zweiten Moduls (2b) von der gemeinsamen Querachse (12b), insbesondere **dadurch, dass** die Module (2a, 2b) von unten aus dem Innengerüst herausgedrückt oder von oben mit einem Schraubendreher und/oder einem anderen geeigneten Werkzeug herausgehebelt werden;
- gleichzeitiges Schwenken des ersten Moduls (2a) um die erste Querachse (12a), sowie Schwenken des zweiten Moduls (2b) um die dritte Querachse (12c);
- Herausnahme des ersten und/oder zweiten Moduls (2a, 2b) durch Lösen des ersten Anschlussmittels (211) des jeweiligen Moduls (2a, 2b).

15. Verfahren zur Montage eines ersten Moduls (2a) und/oder eines zweiten Moduls (2b) aus einem modularen Förderband nach einem der Ansprüche 1 bis 13, **gekennzeichnet durch** nachfolgende Schritte:
- Aufstecken des ersten Moduls (2a) mit seinem ersten Anschlussmittel (211) auf die erste Querachse (12a);
- Aufstecken des zweiten Moduls (2b) mit seinem ersten Anschlussmittel (211) auf die dritte Querachse (12c);
- gleichzeitiges Schwenken beider Module (2a, 2b) um die jeweilige Querachse (12a, 12c) in Richtung der zweiten Querachse (12b);
- Aufstecken der jeweiligen zweiten Anschlussmittel (221) der Module (2a, 2b) auf der zweiten Querachse (12b).
